# EUROPÄISCHE PATENTSCHRIFT

(11) **EP 3 760 360 B1**
(45) Veröffentlichungstag und Bekanntmachung des Hinweises auf die Patenterteilung: **16.02.2022**
(21) Anmeldenummer: 20175641.8
(22) Anmeldetag: 20.05.2020
(51) Int. Cl.: B23K 11/11, B23K 11/25, B23K 11/31

(54) **SCHWEISSSTEUERUNG FÜR EIN SCHWEISSWERKZEUG UND VERFAHREN ZUM VERMEIDEN VON KRAFTSCHWINGUNGEN EINES SCHWEISSWERKZEUGS**
WELDING CONTROL FOR A WELDING DEVICE AND METHOD FOR REDUCING VIBRATIONS OF A WELDING TOOL
COMMANDE DE SOUDAGE POUR UN OUTIL DE SOUDAGE ET PROCÉDÉ PERMETTANT D'ÉVITER DES VIBRATIONS DE FORCE D'UN OUTIL DE SOUDAGE

(30) Priorität: 03.07.2019 DE 102019209723
(43) Veröffentlichungstag der Anmeldung: 06.01.2021
(73) Patentinhaber: Robert Bosch GmbH, 70442 Stuttgart (DE)
(72) Erfinder: Zhang, Xinmei, 97840 Hafenlohr (DE); Stolze, Josephine, 69412 Eberbach (DE)

(56) Entgegenhaltungen:
- WO-A1-2017/162280
- DE-A1- 10 060 055
- DE-C1- 10 144 286

## Beschreibung

### Beschreibung

Die vorliegende Erfindung bezieht sich auf eine Schweißsteuerung für ein Schweißwerkzeug, eine Schweißanlage, und ein Verfahren zum Vermeiden von Kraftschwingungen eines Schweißwerkzeugs gemäß dem Oberbegriff der Ansprüche 1, 8 und 10, um Schäden an dem Schweißwerkzeug zu verhindern.

Schweißwerkzeuge werden eingesetzt, um metallische Teile durch Schweißen zu verbinden. Beispielsweise werden in industriellen Anlagen, insbesondere in Fertigungsstraßen für Fahrzeuge usw., metallische Teile, insbesondere Bleche, durch Schweißen mit Hilfe eines Schweißwerkzeugs verbunden. Im automatisierten Karosserierohbau wird als Schweißwerkzeug eine Schweißzange mit Elektrodenkappen an Schweißelektroden eingesetzt. Beim Widerstandsschweißen werden die zu verschweißenden Bauteile an der zu verschweißenden Stelle mit zwei Schweißelektroden der Schweißzange zusammengedrückt. Dadurch wird ein Stromkreis gebildet, in welchem mit einem speziellen Stromverlauf zwischen den Bauteilen eine Schweißlinse ausgebildet wird. Beim Punkt-/ Widerstandsschweißen ist eine konstante Qualität der Schweißpunkte sehr wichtig.

DE 100 60 055 A1 (Basis für den Oberbegriff der Ansprüche 1, 8 und 10) zeigt ein Meßsystem zur Prozessüberwachung und Qualitätssicherung beim Widerstandsschweißen. DE 101 44 286 C1 beschreibt eine Schweißzange sowie Verfahren zur Beurteilung der Qualität einer Schweißverbindung, welches ohne zusätzliche Messanordnungen die Eindringtiefe von Elektroden in zu verschweißende Blechteile ermitteln können soll. Keines der genannten Dokumente zeigt ein Kraftregelmodul, wie in Anspruch 1 beschrieben.

Solche Schweißzangen sind beispielsweise als servoelektrische Schweißzangen ausgestaltet, um die Kraft zum Zusammendrücken der Schweißzange zum Bilden des Schweißpunkts aufzubringen. Ist die Kraft zu groß, die in die Schweißzange eingeleitet wird, wird die Schweißzange beschädigt. Daher ist der Einsatz eines Kraftreglers vorteilhaft, um die in die Schweißzange eingeleitete Kraft derart zu dosieren, dass keine Beschädigungen an der Schweißzange bzw. dem Schweißwerkzeug auftreten.

Problematisch ist, dass in solchen industriellen Anlagen sehr viele unterschiedliche Schweißzangentypen mit sehr unterschiedlichen mechanischen Eigenschaften eingesetzt werden und von einer Schweißsteuerung steuerbar sein sollen. Jede Schweißzange beeinflusst die Regelung der Kraft signifikant. Als Folge davon ist eine individuelle Parametrierung des Kraftreglers für jede einzelne Schweißzange erforderlich. Dies gestaltet die Schweißsteuerung für die industrielle Anlage sehr aufwändig.

Daher besteht die Aufgabe der vorliegenden Erfindung darin, eine Schweißsteuerung für ein Schweißwerkzeug und ein Verfahren zum Vermeiden von Kraftschwingungen eines Schweißwerkzeugs bereitzustellen, mit welchen die zuvor genannten Probleme gelöst werden können. Insbesondere sollen eine Schweißsteuerung für ein Schweißwerkzeug und ein Verfahren zum Vermeiden von Kraftschwingungen eines Schweißwerkzeugs bereitgestellt werden, bei welchen Beschädigungen an beliebigen Schweißwerkzeugen unterschiedlichen Typs, die von der Schweißsteuerung in einer industriellen Anlage gesteuert werden, ohne großen Aufwand und kostengünstig vermeidbar sind, um sowohl Anlagenstillstände zu vermeiden als auch um eine gleichbleibende Qualität der Schweißverbindungen einfach und kostengünstig zu realisieren.

Diese Aufgabe wird durch eine Schweißsteuerung für ein Schweißwerkzeug nach Anspruch 1 gelöst. Die Schweißsteuerung hat ein Kraftregelmodul zum Regeln eines Verlaufs einer Kraft, welche mindestens eine Elektrode eines Schweißwerkzeugs beim Herstellen einer Schweißverbindung auf mindestens ein Bauteil ausübt, und ein Auswertemodul zur Auswertung der Regelung des Kraftregelmoduls, wobei das Auswertemodul ausgestaltet ist, mindestens einen Reglerparameter des Kraftregelmoduls zu ändern, wenn die Auswertung der Regelung des Kraftregelmoduls ergibt, dass der Verlauf der Kraft Schwingungen aufweist, wie in Anspruch 1 beschrieben.

Die zuvor beschriebene Schweißsteuerung bietet die Möglichkeit, Kraftschwingungen an dem Schweißwerkzeug auf einfache Art und Weise sowie sehr sicher zu erfassen und außerdem zu reduzieren und bestenfalls zu eliminieren. Hierbei wird nach Erkennen von Kraftschwingungen der bisherige Regelablauf des Kraftreglers angepasst, so dass bereits der nächste Schweißvorgang mit reduzierter und bestenfalls bereits optimierter Kraftregelung ablaufen kann. Jedoch ist die Schwingungserkennung und Anpassung der Reglerparameter nicht nur auf die Durchführung eines Schweißvorgangs mit Schweißstrom beschränkt. Die Schwingungserkennung und Anpassung der Reglerparameter kann alternativ bei einem Servicevorgang durchgeführt werden. Beispiele für einen solchen Servicevorgang sind/ist ein Servicevorgang zur Kraftprüfung und/oder zur Kraftskalierung. Bei derartigen Servicevorgängen wird eine Schweißzange als Schweißwerkzeug geschlossen, ohne dass Bauteil(e) zwischen den Elektroden der Schweißzange angeordnet sind und ohne dass elektrischer Strom eingeleitet wird.

Damit kommt es nicht zu Beschädigungen an dem Schweißwerkzeug. Zudem kann auch sichergestellt werden, dass die gewünschte Qualität der Schweißverbindungen erzielt werden kann.

Als Folge davon sind weniger Schweißvorgänge abzubrechen, so dass Ausfälle der Schweißanlage in der industriellen Anlage minimiert werden können. Dadurch wird sowohl der von einer industriellen Anlage produzierte Ausschuss vermindert als auch der Ausstoß der industriellen Anlage erhöht. Zudem wird mit der Schweißsteuerung die Lebensdauer des Schweißwerkzeugs signifikant verbessert. Noch dazu wird erreicht, dass kostenintensive Serviceeinsätze zur Behebung von Störungen der Schweißanlage weniger häufig gefordert sind.

Insgesamt kann die Schweißsteuerung eine Steuerung des Schweißwerkzeugs derart bieten, dass eine hohe Qualität der mit dem Schweißwerkzeug hergestellten Schweißverbindungen sichergestellt wird.

Vorteilhafte weitere Ausgestaltungen der Schweißsteuerung sind in den abhängigen Patentansprüchen angegeben.

Gemäß einem Ausführungsbeispiel ist das Auswertemodul ausgestaltet, den zeitlichen Verlauf der Regelabweichung auszuwerten, um zu bestimmen, ob der Verlauf der Kraft Schwingungen aufweist. Hierbei ist das Auswertemodul ausgestaltet, den zeitlichen Verlauf der Regelabweichung in Bezug auf Periodendauer und Amplitude auszuwerten.

Gemäß einem anderen Ausführungsbeispiel ist das Auswertemodul ausgestaltet, das Frequenzspektrum der Ist-Kraft auf Maxima auszuwerten, um zu bestimmen, ob der Verlauf der Kraft Schwingungen aufweist.

Denkbar ist, dass das Kraftregelmodul einen PD-Regler aufweist, wobei das Auswertemodul ausgestaltet ist, die Proportionalverstärkung des PD-Reglers zu ändern, wenn die Auswertung der Regelung des Kraftregelmoduls ergibt, dass der Verlauf der Kraft Schwingungen aufweist.

Möglich ist, dass das Auswertemodul ausgestaltet ist, den derzeit ausgeführten Schweißverlauf abzubrechen, wenn die Auswertung der Regelung des Kraftregelmoduls ergibt, dass der Verlauf der Kraft Schwingungen aufweist.

Optional ist das Auswertemodul ausgestaltet, eine Meldung auszugeben, wenn die Auswertung der Regelung des Kraftregelmoduls ergibt, dass der Verlauf der Kraft Schwingungen aufweist.

Die zuvor beschriebene Schweißsteuerung kann Teil einer Schweißanlage sein (siehe Anspruch 8), die zudem ein Schweißwerkzeug aufweist, das mindestens eine Elektrode zum Herstellen einer Schweißverbindung an mindestens einem Bauteil aufweist, wobei die Schweißsteuerung zur Steuerung eines Herstellens einer Schweißverbindung mit dem Schweißwerkzeug ausgestaltet ist.

Hierbei kann das Schweißwerkzeug ein Widerstandsschweißwerkzeug sein, das als Schweißzange mit zwei Elektroden ausgestaltet ist.

Die Aufgabe wird zudem durch ein Verfahren zum Vermeiden von Kraftschwingungen eines Schweißwerkzeugs nach Anspruch 10 gelöst. Das Verfahren hat die Schritte: Regeln, mit einem Kraftregelmodul, eines Verlaufs einer Kraft, welche mindestens eine Elektrode des Schweißwerkzeugs beim Herstellen einer Schweißverbindung auf mindestens ein Bauteil ausübt, Auswerten, mit einem Auswertemodul der Regelung des Kraftregelmoduls, und Ändern, mit dem Auswertemodul, mindestens eines Reglerparameters des Kraftregelmoduls, wenn die Auswertung der Regelung des Kraftregelmoduls ergibt, dass der Verlauf der Kraft Schwingungen aufweist, wie in Anspruch 10 beschrieben.

Das Verfahren erzielt die gleichen Vorteile, wie sie zuvor in Bezug auf die Schweißsteuerung genannt sind.

Nachfolgend ist die Erfindung unter Bezugnahme auf die beiliegende Zeichnung und anhand von Ausführungsbeispielen näher beschrieben. Es zeigen:
Fig. 1 eine stark vereinfachte schematische Ansicht einer industriellen Anlage mit einer Schweißanlage gemäß einem ersten Ausführungsbeispiel, die eine Schweißsteuerung zum Steuern eines Schweißwerkzeugs verwendet;
Fig. 2 eine Schnittansicht von Schweißelektroden des Schweißwerkzeugs gemäß dem ersten Ausführungsbeispiel;
Fig. 3 eine vereinfachte Ansicht eines Regelkreises gemäß dem ersten Ausführungsbeispiel zur Regelung der Kraft, die bei Durchführen eines Schweißvorgangs oder Servicevorgangs von dem Schweißwerkzeug auf die Schweißstelle aufgebracht wird;
Fig. 4 ein Flussdiagramm eines Verfahrens, das von der Schweißsteuerung gemäß dem ersten Ausführungsbeispiel bei Durchführen eines Schweißvorgangs zum Erkennen von Kraftschwingungen ausgeführt wird;
Fig. 5 eine vereinfachte Ansicht eines Regelkreises gemäß einem zweiten Ausführungsbeispiel zur Regelung der Kraft, die bei Durchführen eines Schweißvorgangs oder Servicevorgangs von dem Schweißwerkzeug auf die Schweißstelle aufgebracht wird; und
Fig. 6 ein Flussdiagramm eines Verfahrens, das von einer Schweißsteuerung gemäß dem zweiten Ausführungsbeispiel bei Durchführen eines Schweißvorgangs zum Erkennen von Kraftschwingungen ausgeführt wird.

In den Figuren sind gleiche oder funktionsgleiche Elemente, sofern nichts anderes angegeben ist, mit denselben Bezugszeichen versehen.

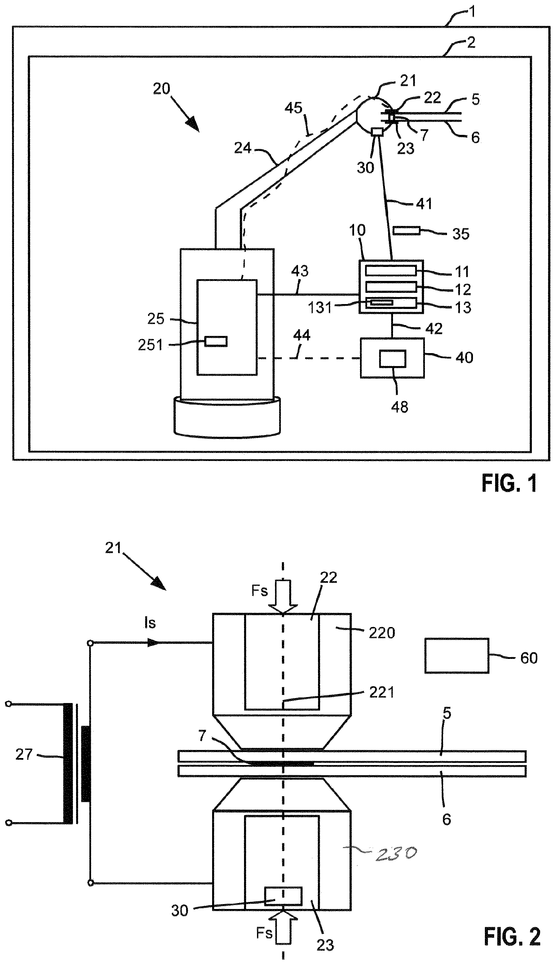

Fig. 1 zeigt eine industrielle Anlage 1 mit einer Schweißanlage 2, die zum Schweißen von mindestens einem metallischen Bauteil 5, 6 verwendet wird. Hierbei wird das mindestens eine metallische Bauteil 5, 6 mit mindestens einer Schweißverbindung 7 verbunden. Die mindestens eine Schweißverbindung 7 ist beispielsweise ein Schweißpunkt und/oder eine Schweißnaht. Hierbei können die zwei metallischen Bauteile 5, 6 oder auch nur zwei Ränder eines der Bauteile 5, 6 miteinander verbunden werden.

Die industrielle Anlage 1 ist beispielsweise eine Fertigungsstraße für Fahrzeuge, Möbel, Bauwerke, usw., in welcher die metallischen Bauteile 5, 6 geschweißt werden. Hierzu weist die Schweißanlage 2 eine Schweißsteuerung 10, eine Vorrichtung 20 zum Führen eines als Widerstandschweißwerkzeug ausgeführten Schweißwerkzeugs 21 mit zwei Schweißelektroden 22, 23, eine Erfassungseinrichtung 30 und eine Bedieneinrichtung 40 auf. Die Vorrichtung 20 wird von einer Steuereinrichtung 25 gesteuert. Zudem sind Kommunikationsleitungen 41 bis 45 vorgesehen, die insbesondere als Bussystem ausgeführt sein können. Mit der Bedieneinrichtung 40 sind Meldungen 48 ausgebbar, insbesondere Statusmeldungen und/oder Fehlermeldungen und/oder sonstige Informationen.

Die Vorrichtung 20 ist insbesondere ein Roboter. Die Bedieneinrichtung 40 ist beispielsweise als Tastatur und/oder eine Maus, ein Laptop, ein berührungsempfindlicher oder berührungsunempfindlicher Bildschirm, usw. oder deren Kombinationen ausführbar.

Gemäß Fig. 1 ist das Schweißwerkzeug 21 eine Schweißzange mit mindestens einer Elektrode 22, 23. Insbesondere ist das Schweißwerkzeug 21 eine servoelektrische Schweißzange. Bei dem Beispiel von Fig. 1 ist die Schweißzange als eine C-Zange ausgebildet. Hierbei ist es möglich, dass einer der Zangenarme, an dessen Ende beispielsweise die Elektrode 22 angeordnet ist, ein beweglicher Zangenarm ist und der andere Zangenarm, an dessen Ende beispielsweise die Elektrode 23 angeordnet ist, ein feststehender Zangenarm ist. An dem feststehenden Zangenarm kann die Erfassungseinrichtung 30, insbesondere ihr Kraftsensor, vorgesehen sein. Alternativ ist es möglich, die Schweißzange als eine X-Zange auszubilden. Die Elektroden 22, 23 sind bei den genannten Schweißzangen vorzugsweise als wassergekühlte Elektrodenschäfte ausgeführt.

Die Schweißsteuerung 10 dient zur Steuerung des Schweißwerkzeugs 21. Daher ist die Schweißsteuerung 10 mit dem Schweißwerkzeug 21 bzw. dessen elektrischen Komponenten über die Kommunikationsleitung 41 verbunden. Die Schweißsteuerung 10 ist außerdem über die Kommunikationsleitung 42 mit der Bedieneinrichtung 40 verbunden. Zudem empfängt die Schweißsteuerung 10 über die Kommunikationsleitung 41 Daten 35, die beim Betrieb des Schweißwerkzeugs 21 von der Erfassungseinrichtung 30 erfasst wurden. Die Erfassungseinrichtung 30 hat hierzu mindestens einen Sensor zum Erfassen von physikalischen Größen, die beim Schweißen relevant sind und nachfolgend als die Daten 35 bezeichnet sind. Derartige physikalische Größen bzw. Daten 35 umfassen insbesondere eine Halte- und/oder Anpresskraft Fs zum Halten des Schweißwerkzeugs 21 an dem mindestens einen Bauteils 5, 6 und/oder Anpressen der Elektroden 22, 23 an das mindestens eine Bauteil 5, 6 beim Ausführen eines Schweißvorgangs zur Herstellung einer Schweißverbindung 7. Somit umfasst die Erfassungseinrichtung 30 insbesondere mindestens einen Kraftsensor.

Die Schweißsteuerung 10 hat ein Auswertemodul 11, ein Kraftregelmodul 12 und ein Speichermodul 13. Das Auswertemodul 11 dient zum Auswerten der Daten 35, die in dem Speichermodul 13 gespeichert werden. Das Ergebnis der Auswertung wird insbesondere bei einer Kraftregelung mit dem Kraftregelmodul 12 verwendet, wie nachfolgend noch genauer beschrieben.

Für die Steuerung eines Schweißvorgangs mit dem Schweißwerkzeug 21 sind in der Schweißsteuerung 10, genauer gesagt ihrem Speichermodul 13, zudem interne Grundparameter bzw. Sollwerte 131 gespeichert, die entweder ab Werk oder später mit Hilfe der Bedieneinrichtung 40 von einem Benutzer eingegeben werden können. Die internen Grundparameter oder Sollwerte 131 können Parameter des Schweißwerkzeugs 21 sein. Zudem können die internen Grundparameter oder Sollwerte 131 Parameter der Schweißsteuerung 10 sein, mit welchen das Schweißwerkzeug 21 gesteuert wird. Insbesondere sind die internen Grundparameter oder Sollwerte 131 ein Phasenanschnitt eines Schweißstroms Is und/oder ein Widerstand R des Schweißwerkzeugs 21 und/oder die Halte- und/oder Anpresskraft Fs. Der Schweißstrom Is wird dem Schweißwerkzeug 21 durch einen in Fig. 1 nicht dargestellten Schweißtransformator zugeführt. Dies ist in Bezug auf Fig. 2 näher beschrieben. Alle internen Grundparameter oder Sollwerte 131 sind als zeitlich abhängige Größen oder Soll-Zeitverläufe der jeweiligen Sollgrößen speicherbar. Somit sind insbesondere ein Is(t) und/oder ein Widerstand R(t) des Schweißwerkzeugs 21 und/oder die Halte- und/oder Anpresskraft Fs(t) speicherbar. Dabei sind kontinuierliche Zeitverläufe oder intermittierend festgelegte Zeitverläufe speicherbar.

Beim Führen des Schweißwerkzeugs 21 mit einem Arm 24 der Vorrichtung 20 wird die Vorrichtung 20 von ihrer Steuereinrichtung 25 gesteuert. Hierfür ist die Steuereinrichtung 25 mit der Schweißsteuerung 10 über die Kommunikationsleitung 43 verbunden. Optional ist die Steuereinrichtung 25 mit der Bedieneinrichtung 40 über eine Kommunikationsleitung 44 verbunden.

Zusätzlich oder alternativ ist die Steuereinrichtung 25 direkt mit der Erfassungseinrichtung 30 und/oder den elektrischen Komponenten des Schweißwerkzeugs 21 mit Hilfe einer Kommunikationsleitung 45 verbunden. Besteht kein Redundanzbedarf, ist es möglich, die Kommunikationsleitung 43 wegzulassen.

Über die Kommunikationsleitungen 42 bis 45 können relevante Daten für die Durchführung einer Schweißung mit dem Schweißwerkzeug 21 zwischen der Schweißsteuerung 10 und der Vorrichtung 20, genauer gesagt der Steuereinrichtung 25, und/oder der Bedieneinrichtung 40 ausgetauscht werden. Zudem können in der Steuereinrichtung 25 interne Grundparameter oder Sollwerte 251 der Steuereinrichtung 25 gespeichert sein, mit welchen das Schweißwerkzeug 21, insbesondere für seine Positionierung im Raum und daher an den Bauteilen 5, 6 gesteuert wird.

Fig. 2 zeigt den Aufbau der Elektroden 22, 23 des Schweißwerkzeugs 21 bei dem vorliegenden Ausführungsbeispiel genauer. Demzufolge ist die Elektrode 22 als Elektrodenschaft ausgebildet, der an seinem einen Ende mit einer Elektrodenkappe 220 versehen ist. Die Elektrodenkappe 220 ist an der Elektrode 22 an ihrem dem Bauteil 5 zugewandten Ende angeordnet. Außerdem ist die Elektrode 23 als Elektrodenschaft ausgebildet, der mit einer Elektrodenkappe 230 versehen ist. Die Elektrodenkappe 230 ist an der Elektrode 23 an ihrem dem Bauteil 6 zugewandten Ende angeordnet.

Das Schweißwerkzeug 21 kann mit einer sehr schematisch dargestellten Reinigungseinrichtung 60, die als Fräs- und/oder Schneideinrichtung oder Austauscheinrichtung ausgeführt sein kann, derart bearbeitet werden, dass der verschmutzte Teil einer der Elektrodenkappen 220, 230 bei Bedarf abgeschnitten oder abgefräst wird. Die Elektrodenkappen 220, 230 sind demzufolge Verschleißobjekte.

Im Betrieb des Schweißwerkzeugs 21 werden die Elektroden 22, 23 an einer zu verschweißenden Stelle an das mindestens eine Bauteil 5, 6 angeordnet und mit Hilfe einer Halte- und/oder Anpresskraft Fs an das mindestens eine Bauteil 5,6 angesetzt. Anders ausgedrückt, die beiden Elektroden 22, 23 spannen die Bauteile 5, 6 mit der Kraft Fs ein. Hierbei sind die Elektroden 22, 23 je nach Anzahl der bereits durchgeführten Fräs- und/oder Schneidvorgängen an den Elektrodenkappen 220, 230 unterschiedlich weit an das mindestens eine Bauteil 5, 6 zuzustellen, um die gewünschte Kraft Fs zu erzielen. Anschließend wird den Elektroden 22, 23 mit Hilfe eines Schweißtransformators 27 ein Schweißstrom Is für eine vorbestimmte Zeitdauer T und in einer vorbestimmten Charakteristik zugeführt. Hierfür wird der Strom Is mit definiertem Stromverlauf, insbesondere mindestens teilweise geregelt, zugeführt. Dadurch entsteht Wärme in dem mindestens einen Bauteil 5, 6, so dass sich eine Schweißlinse ausbildet, die später die Schweißverbindung 7 bildet.

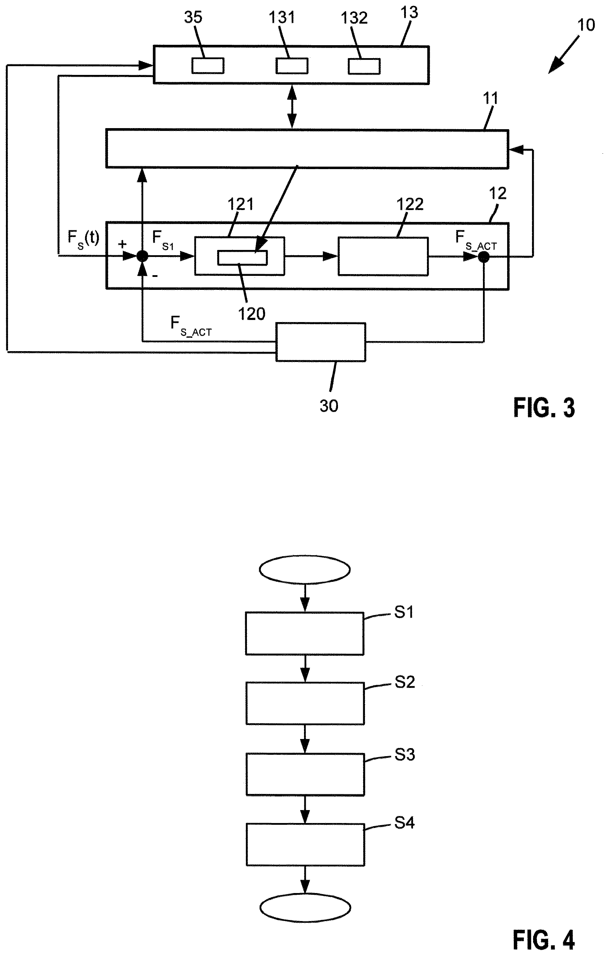

Fig. 3 veranschaulicht den Aufbau des mit dem Kraftregelmodul 12 gebildeten Regelkreises für die Halte- und/oder Anpresskraft Fs bei einem Schweißvorgang mit dem Schweißwerkzeug 21. Bei dem Schweißvorgang wird eine Schweißverbindung 7 hergestellt. Fig. 3 zeigt somit das Kraftregelmodul 12 und seine Verschaltung mit dem Auswertemodul 11, dem Speichermodul 13 und der Erfassungseinrichtung 30 genauer. In dem Speichermodul 13 sind zudem die Daten 35 speicherbar, unter anderem eine von der Erfassungseinrichtung 30 beim Schweißvorgang erfasste Ist-Kraft F_{S_ACT} der Halte- und/oder Anpresskraft Fs. Außerdem sind in dem Speichermodul 13 die Grundparameter und Sollgrößen 131 gespeichert, unter anderem eine zeitabhängige Soll-Kraft F_{S}(t) für die Halte- und/oder Anpresskraft. Noch dazu sind in dem Speichermodul 13 Auswerteergebnisse 132 des Auswertemoduls 11 speicherbar.

Das Kraftregelmodul 12 hat einen PD-Regler 121 mit speziell eingestellten Reglerparametern 120 und eine Regelstrecke 122. Der PD-Regler ist eine Kombination aus Proportionalregler und Differentialregler. Die Regelstrecke 112 ist derjenige Teil des mit dem Kraftregelmodul 12 gebildeten Regelkreises, der die zu regelnde physikalische Größe, nämlich hier die Halte- und/oder Anpresskraft Fs, enthält. Die aktuell wirkende Kraft F_{S_ACT} wird von der Erfassungseinrichtung 30 erfasst, genauer gesagt ihrem mindestens einen Kraftsensor. Das Erfassungsergebnis der Kraft F_{S_ACT} wird wieder dem PD-Regler 121 zugeführt, wie in Fig. 3 gezeigt.

Der PD-Regler 121 wirkt somit auf die Differenz von Sollgröße, also der Soll-Kraft F_{S}(t) der Halte- und/oder Anpresskraft Fs, und der erfassten Ist-Kraft F_{S_ACT} der Halte- und/oder Anpresskraft Fs. In Folge dessen stellt sich eine Kraft F_{S_ACT} ein, die beim Schweißvorgang auf die Elektroden 22, 23 und somit auf das mindestens eine Bauteil 5, 6 wirkt.

Das Auswertemodul 11 ist ausgestaltet, Kraftschwingungen durch Analyse der Regelabweichung F_{S1} = F_{S}(t) - F_{S_ACT} zu erkennen. Hierbei geht das Auswertemodul 11 bei einem Verfahren zur Erkennung der Kraftschwingungen folgendermaßen vor, wie in Fig. 4 veranschaulicht ist. Das Verfahren zur Erkennung der Kraftschwingungen wird bei einem Schweißvorgang, also mit Beaufschlagung mit einem Schweißstrom, oder bei einem Servicevorgang, also ohne Beaufschlagung mit einem Schweißstrom, durchgeführt.

Bei einem Schritt S1 prüft das Auswertemodul 11, ob die Regelabweichung F_{S1} immer nach der gleichen Zeit t1 eine Nullstelle hat. Die Zeit t1 ist insbesondere die halbe Periodendauer einer Schwingung. Werden Nullstellen erkannt, geht der Fluss zu einem Schritt S2 weiter.

Bei dem Schritt S2 prüft das Auswertemodul 11, ob der Betrag |F_{S1}| der Regelabweichung F_{S1} erhöht ist oder nicht. Somit führt das Auswertemodul 11 eine Prüfung der Amplitude der Schwingung durch. Ist der Betrag |F_{S1}| der Regelabweichung F_{S1} erhöht, erkennt das Auswertemodul 11 eine Schwingung, was als Auswerteergebnis 132 in dem Speichermodul 13 gespeichert werden kann. Danach geht der Fluss zu einem Schritt S3 weiter.

Bei dem Schritt S3 bricht die Schweißsteuerung 10, insbesondere ihr Auswertemodul 11, den derzeit durchgeführten Schweißvorgang ab. Außerdem gibt die Schweißsteuerung 10, insbesondere ihr Auswertemodul 11, optional eine Fehlermeldung als Meldung 48 aus, die mit der Bedieneinrichtung 40 angezeigt werden kann. Die Anzeige kann insbesondere optisch und/oder akustisch erfolgen. Danach geht der Fluss zu einem Schritt S4 weiter.

Bei dem Schritt S4 passt die Schweißsteuerung 10, insbesondere ihr Auswertemodul 11, die Reglerparameter 120 des Kraftregelmoduls 12 bzw. des Reglers 121 an, um in der Zukunft bei einem Schweißvorgang Schwingungen der Halte- und/oder Anpresskraft Fs zu vermeiden. Hierbei wird insbesondere die Proportionalverstärkung des PD-Reglers 121 reduziert. Somit findet eine automatische Anpassung der Reglerparameter 120 des Kraftregelmoduls 12, insbesondere des Reglers 121, statt. Danach ist das Verfahren beendet.

Bei dem nächsten Schweißablauf führt die Schweißsteuerung 10 die Regelung der Halte- und/oder Anpresskraft Fs mit den Reglerparametern 120 des Kraftregelmoduls 12, insbesondere des PD-Reglers 121, aus, die nun aufgrund des zuvor beschriebenen Verfahrens eingestellt sind. Bestenfalls sind die Reglerparameter 120 des Kraftregelmoduls 12, insbesondere des PD-Reglers 121, nun bereits optimal eingestellt. Somit ist die zuvor in Bezug auf Schritt S4 beschriebene Anpassung der Reglerparameter 120 bereits beim nächsten Schweißvorgang der Schweißanlage 2 wirksam.

Die Schritte S1 und S2 des zuvor beschriebenen Verfahrens können zumindest zeitweise gleichzeitig durchgeführt werden. Alternativ dazu und zu dem zuvor beschriebenen Verfahren ist es möglich, den Schritt S1 nach dem Schritt S2 durchzuführen.

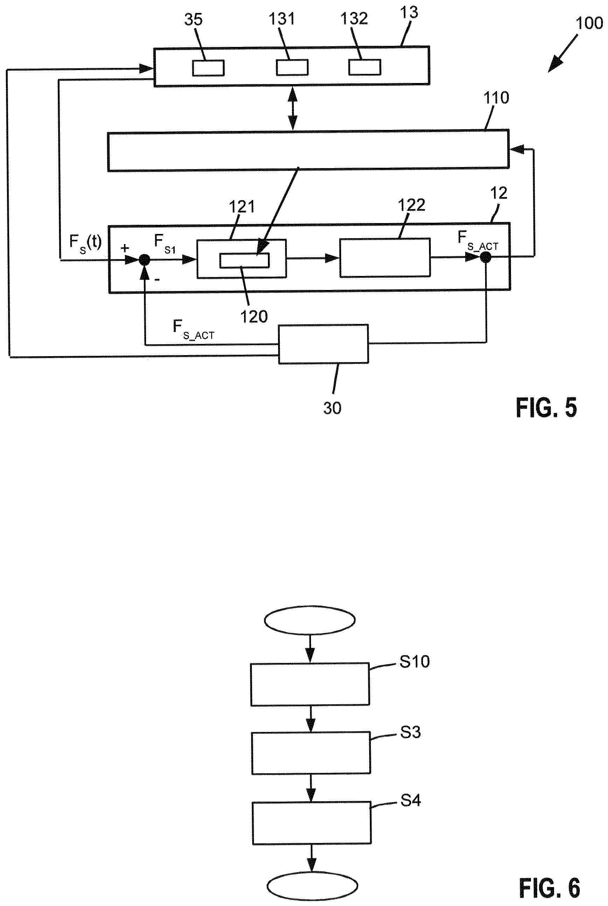

Fig. 5 veranschaulicht den Aufbau eines mit dem Kraftregelmodul 12 gebildeten Regelkreises für die Halte- und/oder Anpresskraft Fs bei einem Schweißvorgang mit dem Schweißwerkzeug 21 und Verwendung einer Schweißsteuerung 100 und ihres Auswertemoduls 110.

Die Schweißsteuerung 100 ist in weiten Teilen auf die gleiche Weise ausgeführt wie für die Schweißsteuerung 10 gemäß dem vorangehenden Ausführungsbeispiel beschrieben. Daher sind im Folgenden nur die Unterschiede der Schweißsteuerung 100 gemäß dem vorliegenden Ausführungsbeispiel zu der Schweißsteuerung 10 gemäß dem vorangehenden Ausführungsbeispiel beschrieben.

Das Auswertemodul 110 wertet nicht die Regelabweichung F_{S1} aus, wie für das Auswertemodul 10 zuvor beschrieben. Stattdessen wertet die Schweißsteuerung 10, insbesondere ihr Auswertemodul 110, das Frequenzspektrum der Ist-Kraft F_{S_ACT} aus. Somit führt die Schweißsteuerung 100, insbesondere ihr Auswertemodul 110, ein Verfahren zum Erkennen von Kraftschwingungen aus, wie in Fig. 6 gezeigt.

Wie in Fig. 6 gezeigt, führt die Schweißsteuerung 100, insbesondere ihr Auswertemodul 110, einen Schritt S10 anstelle der Schritte S1 und S2 von Fig. 4 aus. Bei dem Schritt S10 führt die Schweißsteuerung 100, insbesondere ihr Auswertemodul 110, eine Erkennung von Kraftschwingungen der Halte- und/oder Anpresskraft F_{S} durch Analyse des Frequenzspektrums der Ist-Kraft F_{S_ACT} aus. Hierbei verwendet die Schweißsteuerung 100, insbesondere ihr Auswertemodul 110, eine FFT-Analyse (FFT = Fast Fourier Transformation). Sind in dem Frequenzspektrum der Ist-Kraft F_{S_ACT} Maxima erkennbar, dann deutet dies auf eine Schwingung hin. Somit wertet das Auswertemodul 110 die Maxima als ein Vorliegen einer Kraftschwingung. Zudem geht der Fluss, wenn in dem Frequenzspektrum der Ist-Kraft F_{S_ACT} Maxima erkennbar sind, zu dem Schritt S3 weiter.

Bei dem nachfolgenden Schritt S3 und dem daran anschließenden Schritt S4 wird wieder vorgegangen, wie zuvor in Bezug auf Fig. 4 beschrieben.

Auf diese Weise kann die Schweißsteuerung 100 bei dem nächsten Schweißablauf die Regelung der Halte- und/oder Anpresskraft Fs mit den Reglerparametern 120 des Kraftregelmoduls 12, insbesondere des PD-Reglers 121, ausführen, die nun aufgrund des zuvor beschriebenen Verfahrens eingestellt sind. Bestenfalls sind die Reglerparameter 120 des Kraftregelmoduls 12, insbesondere des PD-Reglers 121, nun bereits optimal eingestellt.

Somit ist es auch mit der Schweißsteuerung 100 möglich, die zuvor in Bezug auf Schritt S4 beschriebene Anpassung der Reglerparameter 120 bereits beim nächsten Schweißvorgang der Schweißanlage 2 wirksam werden zu lassen.

Gemäß einem dritten Ausführungsbeispiel hat die Schweißsteuerung 10 sowohl ein Auswertemodul 11 als auch ein Auswertemodul 110. Durch die Kombination der Auswertungen der Module 11, 110 ist eine noch bessere und/oder sicherere Erkennung und Reaktion auf Kraftschwingungen durchführbar.

Alle zuvor beschriebenen Ausgestaltungen der Schweißanlage 2, der Schweißsteuerungen 10, 100, der Auswertemodule 11, 110, des Kraftregelmoduls 12 und der Verfahren können einzeln oder in allen möglichen Kombinationen Verwendung finden. Insbesondere können alle Merkmale und/oder Funktionen der zuvor beschriebenen Ausführungsbeispiele beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Das Schweißwerkzeug 21 muss nicht als Schweißzange ausgeführt sein, sondern kann auch nur eine Schweißelektrode 22 oder 23 usw. aufweisen.

Optional kann auf beiden Seiten, also nicht nur bei der Elektrode 22 oder nur bei der Elektrode 23, sondern über die beiden Elektroden 22, 23 eine entsprechende Einleitung von Kräften Fs erfolgen.

Möglich ist außerdem, einen anderen Regler 121 als einen PD-Regler zu verwenden. In diesem Fall werden andere Reglerparameter des Reglers 121 geändert, um die Schwingungen der Kraft Fs zu vermeiden. Hierbei ist es alternativ möglich, dass mehrere Regler 121 hintereinandergeschaltet sind. Wird beispielsweise ein Zweipunktregler anstelle eines PD-Reglers verwendet, würde eine weniger dynamische und regelungstechnisch weniger vorteilhafte Lösung als die zuvor beschriebene Lösung mit PD-Regler geschaffen. Hier müssten dann die für den Zweipunktregler passenden Parameter angepasst werden, um Schwingungen zu vermeiden.

## Patentansprüche

1. Schweißsteuerung (10; 100) für ein Schweißwerkzeug (21), mit einem Speichermodul (13), mit einem Kraftregelmodul (12) zum Regeln eines Verlaufs einer Kraft (F_{S}(t); F_{S_ACT}), welche mindestens eine Elektrode (22, 23) eines Schweißwerkzeugs (21) beim Herstellen einer Schweißverbindung (7) auf mindestens ein Bauteil (5, 6) ausübt,
**dadurch gekennzeichnet, dass**
das Kraftregelmodul (11) ausgestaltet ist, bei Durchführung eines Schweißvorgangs, nämlich mit Beaufschlagung mit einem Schweißstrom, oder eines Servicevorgangs, nämlich ohne Beaufschlagung mit einem Schweißstrom, eine Regelabweichung F_{S1} = F_{S}(t) - F_{S_ACT} zu berechnen, bei welcher Fₛ(t) ein Sollwert (131) für die Halte- und/oder Anpresskraft (Fₛ(t)) ist, die als zeitlich abhängige Soll-Kraft in dem Speichermodul (13) gespeichert ist, und F_{S_ACT} eine von einer Erfassungseinrichtung (30) bei dem durchgeführten Schweißvorgang oder Servicevorgang erfasste Ist-Kraft der Halte- und/oder Anpresskraft (F_{S}(t)) ist, und einem Auswertemodul (11; 110) zur Auswertung der Regelung des Kraftregelmoduls (12), wobei das Auswertemodul (11; 110) ausgestaltet ist, mindestens einen Reglerparameter (120) des Kraftregelmoduls (12) zu ändern, wenn die Auswertung der Regelung des Kraftregelmoduls (12) ergibt, dass der Verlauf der Kraft (F_{S}(t); F_{S_ACT}) Schwingungen aufweist.

2. Schweißsteuerung (10) nach Anspruch 1, wobei das Auswertemodul (11) ausgestaltet ist, den zeitlichen Verlauf der Regelabweichung (F_{S1}) auszuwerten, um zu bestimmen, ob der Verlauf der Kraft (F_{S}(t); F_{S_ACT}) Schwingungen aufweist.

3. Schweißsteuerung (10) nach Anspruch 1 oder 2, wobei das Auswertemodul (11) ausgestaltet ist, den zeitlichen Verlauf der Regelabweichung (F_{S1}) in Bezug auf Periodendauer und Amplitude auszuwerten.

4. Schweißsteuerung (10; 100) nach einem der vorangehenden Ansprüche, wobei das Auswertemodul (110) ausgestaltet ist, das Frequenzspektrum der Ist-Kraft (F_{S_ACT}) auf Maxima auszuwerten, um zu bestimmen, ob der Verlauf der Kraft (F_{S}(t); F_{S_ACT}) Schwingungen aufweist.

5. Schweißsteuerung (10; 100) nach einem der vorangehenden Ansprüche,
wobei das Kraftregelmodul (12) einen PD-Regler (121) aufweist, und
wobei das Auswertemodul (11; 110) ausgestaltet ist, die Proportionalverstärkung des PD-Reglers (121) zu ändern, wenn die Auswertung der Regelung des Kraftregelmoduls (12) ergibt, dass der Verlauf der Kraft (F_{S}(t); F_{S_ACT}) Schwingungen aufweist.

6. Schweißsteuerung (10; 100) nach einem der vorangehenden Ansprüche, wobei das Auswertemodul (11; 110) ausgestaltet ist, den derzeit ausgeführten Schweißverlauf abzubrechen, wenn die Auswertung der Regelung des Kraftregelmoduls (12) ergibt, dass der Verlauf der Kraft (F_{S}(t); F_{S_ACT}) Schwingungen aufweist.

7. Schweißsteuerung (10; 100) nach einem der vorangehenden Ansprüche, wobei das Auswertemodul (11; 110) ausgestaltet ist, eine Meldung (48) auszugeben, wenn die Auswertung der Regelung des Kraftregelmoduls (12) ergibt, dass der Verlauf der Kraft (F_{S}(t); F_{S_ACT}) Schwingungen aufweist.

8. Schweißanlage (2), mit
einem Schweißwerkzeug (21), das mindestens eine Elektrode (22, 23) zum Herstellen einer Schweißverbindung (7) an mindestens einem Bauteil (5, 6) aufweist, einer Erfassungseinrichtung (30) zu Erfassen einer Ist-Kraft der Halte- und/oder Anpresskraft (Fs(t)) bei einem durchgeführten Schweißvorgang, nämlich mit Beaufschlagung mit einem Schweißstrom, oder Servicevorgang, nämlich ohne Beaufschlagung mit einem Schweißstrom,
und **gekennzeichnet durch**:
eine Schweißsteuerung (10) nach einem der vorangehenden Ansprüche zur Steuerung eines Herstellens einer Schweißverbindung (7) mit dem Schweißwerkzeug (21).

9. Schweißanlage (2) nach Anspruch 8, wobei das Schweißwerkzeug (21) ein Widerstandsschweißwerkzeug ist, das als Schweißzange mit zwei Elektroden (22, 23) ausgestaltet ist.

10. Verfahren zum Vermeiden von Kraftschwingungen eines Schweißwerkzeugs (21),
**dadurch gekennzeichnet, dass** das Verfahren die Schritte aufweist Regeln, mit einem Kraftregelmodul (12), eines Verlaufs einer Kraft (Fₛ(t); F_{S_ACT}), welche mindestens eine Elektrode (22, 23) des Schweißwerkzeugs (21) beim Herstellen einer Schweißverbindung (7) auf mindestens ein Bauteil (5, 6) ausübt, wobei das Kraftregelmodul (11) ausgestaltet ist, bei Durchführung eines Schweißvorgangs, nämlich mit Beaufschlagung mit einem Schweißstrom, oder eines Servicevorgangs, nämlich ohne Beaufschlagung mit einem Schweißstrom, eine Regelabweichung F_{S1} = F_{S}(t) - F_{S_ACT} zu berechnen, bei welcher Fₛ(t) ein Sollwert (131) für die Halte- und/oder Anpresskraft (F_{S}(t)) ist, die als zeitlich abhängige Soll-Kraft in einem Speichermodul (13) gespeichert ist, und F_{S_ACT} eine von einer Erfassungseinrichtung (30) bei dem durchgeführten Schweißvorgang oder Servicevorgang erfasste Ist-Kraft der Halte- und/oder Anpresskraft (Fₛ(t)) ist,
Auswerten (S1, S1; S10), mit einem Auswertemodul (11; 110) der Regelung des Kraftregelmoduls (12), und
Ändern (S4), mit dem Auswertemodul (11; 110), mindestens eines Reglerparameters (120) des Kraftregelmoduls (12), wenn die Auswertung der Regelung des Kraftregelmoduls (12) ergibt, dass der Verlauf der Kraft (F_{S}(t); F_{S_ACT}) Schwingungen aufweist.

## Claims

1. Welding control (10; 100) for a welding tool (21), with a memory module (13), with a force control module (12) for controlling a progression of a force (Fₛ(t); F_{S_ACT}), which at least one electrode (22, 23) of a welding tool (21) exerts on at least one component (5, 6) when producing a welded connection (7),
**characterized in that**
the force control module (11) is designed to calculate a system deviation FS1 = FS(t) - FS_ACT when carrying out a welding operation, specifically with a welding current being applied, or a servicing operation, specifically without a welding current being applied, where Fₛ(t) is a setpoint value (131) for the holding and/or pressing force (Fₛ(t)), which is stored in the memory module (13) as a time-dependent setpoint force, and F_{S_ACT} is an actual force of the holding and/or pressing force (Fₛ(t)) detected by a detecting device (30) during the welding operation or servicing operation carried out, and an evaluating module (11; 110) for evaluating the control of the force control module (12), the evaluating module (11; 110) being designed to change at least one controller parameter (120) of the force control module (12) if the evaluation of the control of the force control module (12) finds that the progression of the force (Fₛ(t); F_{S_ACT}) has oscillations.

2. Welding control (10) according to Claim 1, the evaluating module (11) being designed to evaluate the progression over time of the system deviation (F_{S1}) in order to determine whether the progression of the force (Fₛ(t); F_{S_ACT}) has oscillations.

3. Welding control (10) according to Claim 1 or 2, the evaluating module (11) being designed to evaluate the progression over time of the system deviation (F_{S1}) with reference to the period duration and the amplitude.

4. Welding control (10; 100) according to one of the preceding claims, the evaluating module (110) being designed to evaluate the frequency spectrum of the actual force (F_{S_ACT}) for maxima in order to determine whether the progression of the force (Fₛ(t); F_{S_ACT}) has oscillations.

5. Welding control (10; 100) according to one of the preceding claims, the force control module (12) having a PD controller (121), and the evaluating module (11; 110) being designed to change the proportional gain of the PD controller (121) if the evaluation of the control of the force control module (12) finds that the progression of the force (Fₛ(t); F_{S_ACT}) has oscillations.

6. Welding control (10; 100) according to one of the preceding claims, the evaluating module (11; 110) being designed to break off the welding procedure being carried out at the time if the evaluation of the control of the force control module (12) finds that the progression of the force (F_{S}(t); F_{S_ACT}) has oscillations.

7. Welding control (10; 100) according to one of the preceding claims, the evaluating module (11; 110) being designed to output a message (48) if the evaluation of the control of the force control module (12) finds that the progression of the force (F_{S}(t); F_{S_ACT}) has oscillations.

8. Welding system (2), with
a welding tool (21), which has at least one electrode (22, 23) for producing a welded connection (7) on at least one component (5, 6), a detecting device (30) for detecting an actual force of the holding and/or pressing force (FS(t)) during a welding operation carried out, specifically with a welding current being applied, or a servicing operation, specifically without a welding current being applied,
and **characterized by**:
a welding control (10) according to one of the preceding claims for controlling the process of producing a welded connection (7) with the welding tool (21).

9. Welding system (2) according to Claim 8, the welding tool (21) being a resistance welding tool, which is designed as a welding gun with two electrodes (22, 23) .

10. Method for avoiding force oscillations of a welding tool (21), **characterized in that** the method comprises the steps of
controlling, with a force control module (12), a progression of a force (FS(t); FS_ACT) which at least one electrode (22, 23) of the welding tool (21) exerts on at least one component (5, 6) when producing a welded connection (7), the force control module (11) being designed to calculate a system deviation F_{S1} = F_{S}(t) - F_{S_ACT} when carrying out a welding operation, specifically with a welding current being applied, or a servicing operation, specifically without a welding current being applied, where Fₛ(t) is a setpoint value (131) for the holding and/or pressing force (Fₛ(t)), which is stored in a memory module (13) as a time-dependent setpoint force, and F_{S_ACT} is an actual force of the holding and/or pressing force (Fₛ(t)) detected by a detecting device (30) during the welding operation or servicing operation carried out,
evaluating (S1, S1; 10), with an evaluating module (11; 110), the control of the force control module (12), and
changing (S4), with the evaluating module (11; 110), at least one controller parameter (120) of the force control module (12) if the evaluation of the control of the force control module (12) finds that the progression of the force (Fₛ(t); F_{S_ACT}) has oscillations.

## Revendications

1. Commande de soudage (10 ; 100) destinée à un outil de soudage (21), ladite commande comprenant un module de mémorisation (13), un module de régulation de force (12) destiné à réguler l'allure d'une force (Fₛ(t) ; F_{S_ACT}) qu'au moins une électrode (22, 23) d'un outil de soudage (21) exerce sur au moins un composant (5, 6) lors de la réalisation d'une liaison soudée (7), **caractérisée en ce que**
le module de régulation de force (11) est conçu pour calculer, lors de la réalisation d'un processus de soudage, à savoir avec application d'un courant de soudage, ou d'un processus de service, à savoir sans application d'un courant de soudage, un écart de régulation Fₛ₁ = Fₛ(t) - F_{s_ACT} pour lequel Fₛ(t) est pour la force de maintien et/ou de pression (Fₛ(t)) une valeur de consigne (131) qui est mémorisée dans le module de mémorisation (13) comme force de consigne dépendante du temps, et F_{s_ACT} est une force réelle de la force de maintien et/ou de pression (Fₛ(t)), qui est détectée par un dispositif de détection (30) lors du processus de soudage ou du processus de service, et un module d'évaluation (11 ; 110) destiné à évaluer la régulation du module de régulation de force (12), le module d'évaluation (11 ; 110) étant conçu pour modifier au moins un paramètre de régulation (120) du module de régulation de force (12) si l'évaluation de la régulation du module de régulation de force (12) montre que l'allure de la force (Fₛ(t) ; F_{s_ACT}) comporte des oscillations.

2. Commande de soudage (10) selon la revendication 1, le module d'évaluation (11) étant conçu pour évaluer l'allure dans le temps de l'écart de régulation (Fₛ₁) afin de déterminer si l'allure de la force (Fₛ(t) ; F_{s_ACT}) comporte des oscillations.

3. Commande de soudage (10) selon la revendication 1 ou 2, le module d'évaluation (11) étant conçu pour évaluer l'allure dans le temps de l'écart de régulation (F_{S1}) en fonction de la période et de l'amplitude.

4. Commande de soudage (10 ; 100) selon l'une des revendications précédentes, le module d'évaluation (110) étant conçu pour évaluer le spectre fréquentiel de la force réelle (F_{s_ACT}) pour déterminer des maxima afin de déterminer si l'allure de la force (Fₛ(t) ; F_{s_ACT}) comporte des oscillations.

5. Commande de soudage (10 ; 100) selon l'une des revendications précédentes,
le module de régulation de force (12) comportant un régulateur PD (121), et
le module d'évaluation (11 ; 110) étant conçu pour modifier le gain proportionnel du régulateur PD (121) lorsque l'évaluation de la régulation du module de régulation de force (12) montre que l'allure de la force (Fₛ(t) ; F_{s_ACT}) comporte des oscillations.

6. Commande de soudage (10 ; 100) selon l'une des revendications précédentes, le module d'évaluation (11 ; 110) étant conçu pour interrompre le processus de soudage en cours si l'évaluation de la régulation du module de régulation de force (12) montre que l'allure de la force (Fₛ(t) ; F_{s_ACT}) comporte des oscillations.

7. Commande de soudage (10 ; 100) selon l'une des revendications précédentes, le module d'évaluation (11 ; 110) étant conçu pour délivrer un message (48) lorsque l'évaluation de la régulation du module de régulation de force (12) montre que l'allure de la force (Fₛ(t) ; F_{s_ACT}) comporte des oscillations.

8. Système de soudage (2), comprenant un outil de soudage (21) qui comporte au moins une électrode (22, 23) destinée à réaliser une liaison soudée (7) sur au moins un composant (5, 6), un dispositif de détection (30) destiné à détecter une force réelle de la force de maintien et/ou de pression (Fₛ(t)) lorsqu'un processus de soudage, à savoir avec application d'un courant de soudage, ou un procédé de service, à savoir sans application d'un courant de soudage, est réalisé,
et **caractérisé par** : une commande de soudage (10) selon l'une des revendications précédentes destinée à commander la réalisation d'une liaison soudée (7) avec l'outil de soudage (21).

9. Système de soudage (2) selon la revendication 8, l'outil de soudage (21) étant un outil de soudage par résistance qui est conçu comme une pince à souder pourvue de deux électrodes (22, 23).

10. Procédé permettant d'éviter les oscillations de force d'un outil de soudage (21), **caractérisé en ce que** le procédé comporte les étapes suivantes :
réguler, à l'aide d'un module de régulation de force (12), l'allure d'une force (Fₛ(t) ; F_{s_ACT}), qu'au moins une électrode (22, 23) de l'outil de soudage (21) exerce sur au moins un composant (5, 6) lors de la réalisation d'une liaison soudée (7), le module de régulation de force (11) étant conçu pour calculer, lors de la réalisation d'un processus de soudage, à savoir avec application d'un courant de soudage, ou d'un processus de service, à savoir sans application d'un courant de soudage, un écart de régulation Fₛ₁ = Fₛ(t) - F_{s_ACT}, pour lequel Fₛ(t) est pour la force de maintien et/ou de pression (Fₛ(t)) une valeur de consigne (131) qui est mémorisée comme force de consigne dépendant du temps dans un module de mémorisation (13), et F_{s_ACT} étant une force réelle de la force de maintien et/ou de pression (Fₛ(t)), qui est détectée par un dispositif de détection (30) lors du processus de soudage ou du processus de service réalisé,
évaluer (S1, S1 ; S10), à l'aide d'un module d'évaluation (11 ; 110), la régulation du module de régulation de force (12), et
modifier (S4), à l'aide du module d'évaluation (11 ; 110), au moins un paramètre de régulation (120) du module de régulation de force (12) si l'allure de la régulation du module de régulation de force (12) montre que l'allure de la force (Fₛ(t) ; F_{s_ACT}) comporte des oscillations.
